# EUROPÄISCHE PATENTANMELDUNG

(11) **EP 2 730 956 A1**
(43) Veröffentlichungstag der Anmeldung: **14.05.2014**
(21) Anmeldenummer: 13005246.7
(22) Anmeldetag: 07.11.2013
(51) Int. Cl.: G02B 3/12, F24J 2/08, H01L 31/052

(54) **Solarthermiemodul**

(30) Priorität: 09.11.2012 EP 12007615
(71) Anmelder: Treutner, Wolfgang, 20253 Hamburg (DE)
(72) Erfinder: Treutner, Wolfgang, 20253 Hamburg (DE)

(57) **Zusammenfassung**

Solarthermiemodule, die einzeln oder in Gruppen hintereinander montiert werden können. Sie sind unmittelbar nebeneinander aufgebaut und durch Schnellverschlüsse miteinander verbunden. Das Besondere ist, dass statt Parabolspiegel bifokale Linsen verwendet werden, wobei die Glaslinsen nicht aus massivem Glas bestehen, sondern mit Wasser gefüllt sind. Sie werden vollautomatisch gesteuert und folgen dem Sonnenverlauf, indem Fotozellen mit Schaltsegmenten den Bewegungsimpuls auslösen, bzw. stoppen. Der gesamte Strom und die Elektrik der Anlage werden durch Fotovoltaik erzeugt und eine Batterie dient der Pufferung. Der Bewegungsantrieb kann hydraulisch oder elektrisch erfolgen. Wärmeschutzeinrichtungen steuern die Anlage im Notfall aus dem Brennpunkt.

Die Glaslinsen bewegen sich kreisförmig um die Brennlinie, welche gleichzeitig die mit Wasser oder Öl gefüllte Rohrleitung darstellt. Ein Kontergewicht sorgt dafür, dass die Anlage leicht beweglich ist. Das Kontergewicht kann mit Wasser bzw. mit Öl gefüllt sein.

Solarthermiemodule, mit wippenden Glaslinsen in gleicher Bauart wie oben beschrieben, die nicht mehr kreisen. Hierbei sind der Schwerpunkt der Linse und der Aufhängung der Drehpunkt der Anlage. Die Flügelenden bewegen sich auf und ab gleich einer Wippe. Das ermöglicht eine sehr geringe Bauarthöhe bzw. Konstruktion an Gebäuden, auch senkrecht zum Haus, was auch speziell alleine für die Warmwasseraufbereitung in Gebäuden sinnvoll sein kann.

Solarthermiemodule die anstelle von ganzen Doppellinsen nur noch aus Prismen bestehen. Sie zeichnen sich in erster Linie durch Gewichtseinsparung aus. Die Wärmeausbeute ist exakt die gleiche. Der Herstellungsprozess ist dadurch preiswerter. Es können auch Kombination von beiden, also volle Wasserlinsen und Prismenanteile zusammengestellt werden. Der Bewegungsablauf kann sowohl kreisend als auch wippend sein. Beide Methoden sind möglich.

## Beschreibung

Die Erfindung zur Energiegewinnung bezieht sich auf Module mit bikonvexen Linsen, fortlaufend Doppellinsen genannt, die einzeln oder in kleinen oder in großen Gruppen Sonnenlicht so konzentrieren, dass damit Rohrleitungen (Absorberrohr), die mit Wasser oder Öl gefüllt sind, erwärmt werden können.

### Stand der Technik:

Bei den heutigen Solarthermie-Anlagen mit Parabolspiegeln wird das Sonnenlicht per Spiegelreflektion auf ein Rohr gebündelt, in dem sich eine Flüssigkeit befindet, die erwärmt werden soll. Diese Anlage wird exakt der Sonne nachgeführt und erfordert eine sehr aufwändige Konstruktion. Sie werden in der Regel in Wüstenregionen aufgebaut, wo durch den Wechsel von wolkenloser, heißer Umgebung und extremer Abkühlung Windturbulenzen entstehen. Die Anlage, die häufig eine Bauhöhe von über 5m und mehr hat, ist deshalb besonders störanfällig und muss sehr aufwändig und präzise gebaut werden. Der unregelmäßige Winddruck, der sich negativ auf die Anlage auswirkt, führt bei großen Anlagen zu erheblicher Versandung und Verschmutzung.

Das Material zur Herstellung der Anlage mit Parabolspiegeln ist sehr teuer, außerdem umweltschädlich bei der Herstellung und Entsorgung.

Die Wartung der Anlage ist bauartbedingt sehr teuer. Spannungen im Spiegelsystem beeinflussen den Wirkungsgrad. Zu erwärmende Rohrleitungen werden durch Windturbulenzen teilweise wieder abgekühlt, da sich diese im Fokusbereich des Parabolspiegels befinden und somit weit im Außenbereich mit geschwenkt werden. Auch die zylindrische Ummantelung mit Schutzglas hilft nur teilweise. Die großvolumigen Anlagen sind erheblich schwerer zu warten als Anlagen in Arbeitshöhe eines Menschen

### Kritik am Stand der Technik:

Kleine und mittlere solarthermische Anlagen sind bauartbedingt zurzeit nicht auf dem Markt. Turbinenanlagen zur Stromgewinnung rechnen sich nur als Großkraftwerke. Kleine Turbinen werden wegen der schlechten Effizienz nicht eingesetzt. Es gibt keine Kleinanlagen für besondere Zwecke zum Beispiel zum Kochen oder als Heißwasserlieferant für verschiedene Betriebe wie Wäschereien etc. Das gleiche gilt für die Kochstellen, Klima- und Geschirrspülanlagen in Hotels und Betrieben. Dezentrale kleine Wassergewinnungsanlagen sind unwirtschaftlich, und große Anlagen sind teuer.

### Darstellung der Erfindung:

Module mit bikonvexen Linsen konzentrieren das Sonnenlicht so, dass damit Rohrleitungen, die mit Wasser oder Öl gefüllt sind, erwärmt werden können. Die erhitzte Flüssigkeit in den Rohrleitungen kann spezifisch über Wärmetauscher den jeweiligen Anwendungen zugeführt werden. Um das Sonnenlicht zu konzentrieren, werden konvexe Halblinsen oder Doppellinsen mit Wasserfüllung präzise unter 90° zur Sonneneinstrahlung ausgerichtet und ständig nachgeführt. Um exakt nachführen zu können, können die Außenseiten der Linse rechts und links mit Fotozellen bestückt werden, die sobald sie von der Sonne beschienen werden, einen Stellmotor in Bewegung setzen, bis die Sonne genau senkrecht auf die Linse scheint, und der Stellmotor von der Fotozelle zusammen mit dem Schaltelement zum Stehen kommt. Das Schaltelement bewirkt ein ständiges Nachjustieren der Anlage nach der sich bewegenden Sonne. Es reagiert mit dem Verlassen des Brennpunktes bei einer Überhitzungsmeldung der Sicherheitssensoren. Um netzunabhängig sein zu können sind neben den Fotozellen zur Messung auch Solarzellen zur Stromgewinnung (Fotovoltaik) angebracht, die auch zur Ladung einer Batterie erforderlich sind. Batterien und Solarzellen sind nötig, um den Bewegungsmotor und Pumpen zu betreiben. Module, die hydraulisch betrieben werden, benötigen ebenso Strom für ihre Motoren. Andere Steuerungssysteme sind auch möglich.

Die Module, die aus einem festen Untergestell und einem beweglichen Obergestell mit einer festen Rohrleitung bestehen, konzentrieren mit Hilfe von Linsen das Sonnenlicht auf die Rohrleitung und erwärmen diese. In dem beweglichen Oberteil befindet sich in einem Gestell die Linse. Das Oberteil folgt dem Lauf der Sonne im Halbkreis um einen Drehpunkt, austariert durch ein Gegengewicht. Im Drehpunktbereich befindet sich die Rohrleitung, die nicht bewegt wird. Die Flüssigkeit in der Rohrleitung, Wasser oder Öl, wird durch Pumpen weiter bewegt. Je nach Anwendung werden Module nebeneinander gestellt. Da die Linsen nur in einer Drehachse bewegt werden, scheint das konzentrierte Sonnenlicht übergangslos auf das nächste Modul. Durch bessere Effizienz werden auch kurze Rohrleitungen sehr heiß. Dadurch begrenzt sich die Anzahl der Module, bzw. die Länge der gesamten Anlage bis zum Wärmetauscher. Durch Temperaturfühler, die in bestimmten Abständen installiert sind, wird die Temperatur gemessen. Bei zu hoher Temperatur wird die Geschwindigkeit des Durchlaufs erhöht, bei geringerer Temperatur entsprechend verringert. Das heiße Öl wird in mehrere Thermostat gesteuerte Kammern gepresst. Das Öl wird aus der Kammer mit der höchsten Temperatur zuerst abgegeben, mit der nächsthohen Temperatur danach usw. Es kann in einem Wärmetauscher abgekühlt und erneut zur Erwärmung durch die Rohrleitungen gedrückt werden. Das heiße Öl kann verschiedentlich zur Anwendung kommen. Die einfachste Nutzung ist, mit dem Öl eine Kochstelle, Bäckerei etc. zu betreiben. Direkt reguliert durch Schalter mit Temperatureinteilungen, analog zu einem normalen Küchenherd. Nach demselben System kann Wasser zum Waschen oder Spülen erwärmt werden. Z.B. würde es die hygienische Situation in Krankenhäusern und Hotels stark verbessern, da die Wäsche gekocht werden könnte ohne erhebliche Stromkosten. Für dörfliche Gemeinschaften in heißen Ländern ist es die ideale Form. Der nächste Schritt wäre eine Brauchwassergewinnung zum Beispiel aus Salzwasser. Durch die Wärmeleitung wird per Wärmetauscher Wasser verdampft, dann kondensiert, aufgefangen, und wieder verdampft bis Wasser in Trinkwasserqualität daraus entsteht. Will man nur Dampf erzeugen, kann damit ein Dampfkolbenmotor mit Generator Strom erzeugt werden. Zum Betreiben von Turbinen zur Stromerzeugung müssen entsprechend viele Module hintereinander geschaltet werden.

### Vorteile der Erfindung:

Module, die anstatt Parabolspiegel Glaslinsen in gleicher Größe haben, sammeln die gleiche Wärme ein. Bei den Doppellinsen aus Glas wird allerdings die Brennweite um die Hälfte verkürzt. Massive Glaslinsen wären unbezahlbar, deshalb werden sie mit Wasser gefüllt und erfüllen präzise den gleichen Zweck. Ob die Glaslinsen um den Brennpunkt kreist, oder um den Schwerpunkt wippt, verändert das Ergebnis nicht.

Module, in deren Oberteile Glaslinsen eingesetzt sind, schützen durch ihre Bauweise die darunter liegende Ölleitung. Sie bieten durch ihre Form Windattacken und Stürmen wenig Angriffsfläche und sind leicht zu reinigen. Bei Beschädigungen sind sie außerdem mit wenigen Handgriffen komplett auszutauschen. Die Wasserfüllungen der Linsen dienen außerdem zur Wärmekontrolle und könnten bei Überhitzung automatisch per Thermostat bei einer gleichmäßigen Temperatur gehalten werden. Eine luftgefüllte Libellenanzeige lässt optisch die Wasserausdehnung erkennen. Da es sich um eine Doppellinse handelt, verkürzt sich die Brennweite außerdem um die Hälfte in der Relation zum Parabolspiegel. Gegengewichte bewirken leichtes Nachführen der Glaslinsen durch Kugel- oder Wälzlager. Durch die Komplettausstattung mit Foto-und Solarzellen mit Schaltungselementen und Stromzufuhr per Batterie, arbeiten die einmal aufgestellten Module völlig autark und benötigen keine Wartung durch Spezialisten. Dadurch sind die Wartungskosten äußerst gering, genauso wie die Herstellungskosten, die nur einen Bruchteil der üblichen Kosten bei solarthermische Anlagen ausmachen. Zudem ist Glas überall auf der Welt preiswert herzustellen und sauber und einfach zu recyceln.

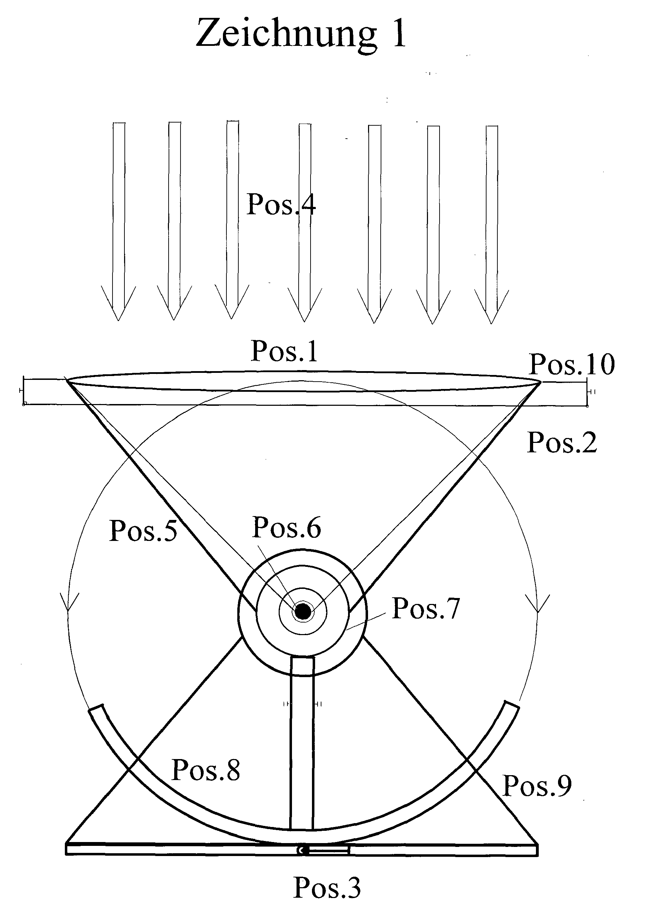

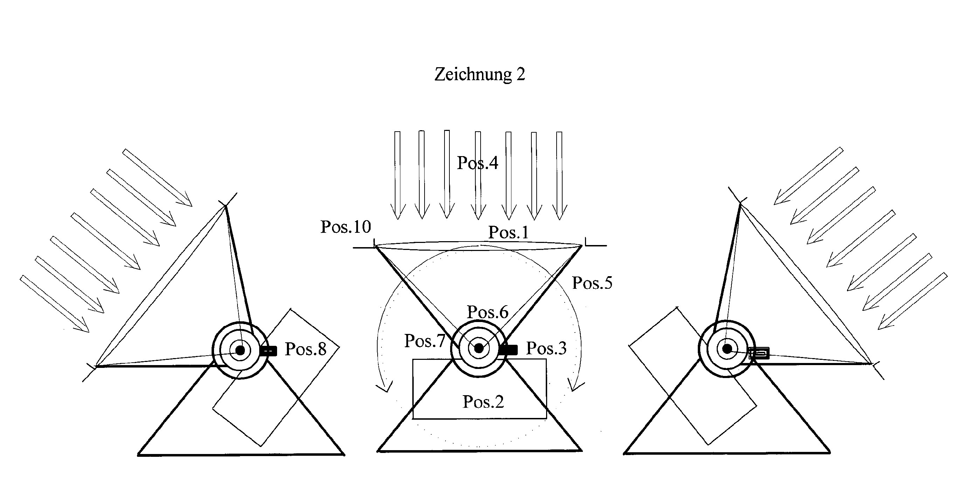

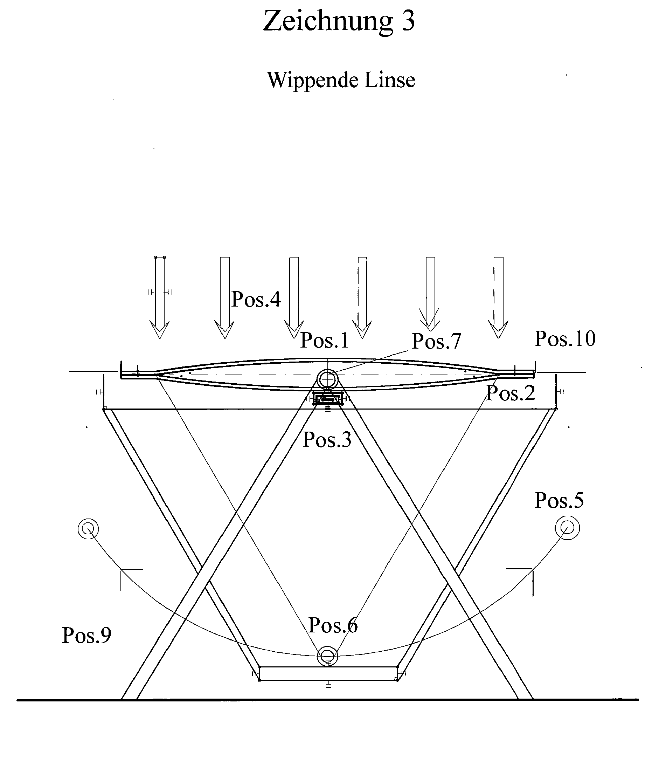

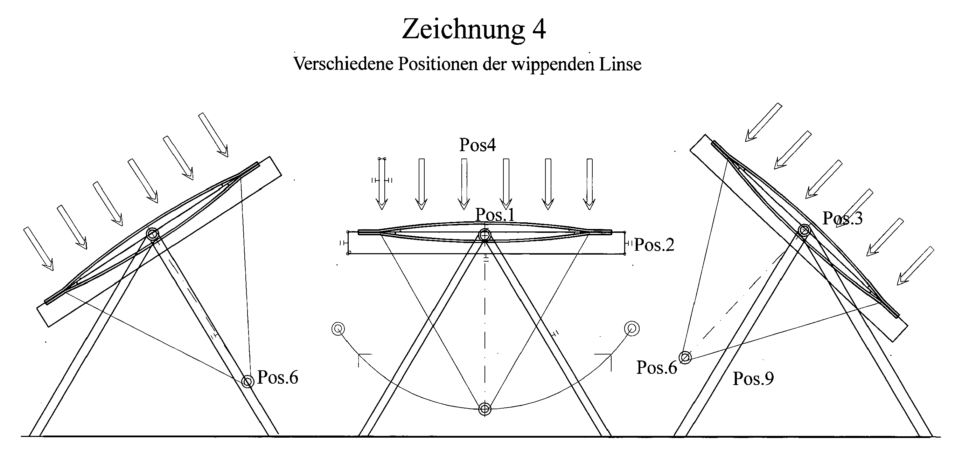

## Patentansprüche

1. ***Wasser gefüllte, lineare und transparente Doppellinsen. Dadurch gekennzeichnet***
**dass** transparente Doppellinsen eine linearer Brennpunktfokussierung haben und dass diese das Sonnenlicht auf eine Linie bündeln, und das die Linsen mit Wasser gefüllt sind.
Die konvexen Doppellinsen können aus Glas oder Kunststoff bestehen

2. ***Verfahren nach Anspruch 1***
***Mit Wasser gefüllte, lineare, transparente, einfache Linsen***
***Dadurch gekennzeichnet,***
**dass** der lineare Hohlkörper nur aus jeweils einer konvexen Linse besteht.

3. ***Verfahren nach Anspruch 1 oder 2***
***Die Linsen werden so montiert, dass sie um den Schwerpunkt wippen können.***
***Dadurch gekennzeichnet,***
**dass** die Linsen mechanisch gesteuert, dem Lauf der Sonne folgend, sich um den Schwerpunkt wippend bewegen.

4. ***Verfahren nach Anspruch 1 oder 2***
***Linsen, die der Sonne folgen, und um den Brennpunkt kreisen.***
***Dadurch gekennzeichnet,***
**dass** die Linsen so angebracht sind, dass sie um den linearen Brennpunkt kreisen.
***Beschreibung der Erfindung unter Bezugnahme* auf *die Zeichnungsnummer 1 bis 4:***
Zeichnung Nummer 1 und 2 zeigt eine Doppellinse Position 1), die um das Absorberrohr kreist, Position 6). Durch ein Gegengewicht Position 8) werden die beweglichen Teile ausbalanciert. Einen leichten Lauf erhält man durch ein Kugellager Position 7). Position 3) symbolisiert einen Stellmotor mit Antrieb zur jeweiligen Position des einfallenden Sonnenlichtes, Position 4). An dem Linsengestellt Position 2) können Fotovoltaik Anlagen und Fotozellen angebracht werden. Position 5 und 9) bilden das tragende Gestell. Bei der Zeichnung Position 2) sind die verschiedenen Stellungen angezeigt, die durch den wechselnden Sonnenlichteinfall entstehen.
Zeichnung Nummer 3 zeigt die wippende Linse mit einer senkrechten Sonneneinstrahlung. Zeichnung Nummer 4 zeigt eine Systemzeichnung mit der Sonneneinstrahlung aus verschiedenen Richtungen. Bei beiden Zeichnungen ist die Linse, Position 1), mit dem Wipp Drehpunkt, Position 3), auf dem Untergestänge, Position 9), verankert. Bei großen Anlagen wird dieser wird die Aufhängung des Drehpunktes an ein Gestänge montiert. Damit können die Linsen frei schwingen. Die zu erwärmende Rohrleitung, Position 6), schwingt mit der wippenden Linse mit. An den Außenseiten des Linsenrahmens, Position 2), befinden sich die Fotozellen und Fotovoltaik Anlagen, Position 10). Die Sonneneinstrahlung, Position 4), erfolgt aus verschiedenen Richtungen aber immer senkrecht unter 90° zur Oberfläche der Linse.
